Europäisches Patentamt

European Patent Office

Office européen des brevets

(19)

(11) Numéro de publication : **0 079 285**
**B1**

# (12) FASCICULE DE BREVET EUROPÉEN

(45) Date de publication du fascicule du brevet :
24.04.85

(51) Int. Cl.⁴ : **F 01 D   5/18**

(21) Numéro de dépôt : 82402043.2

(22) Date de dépôt : 08.11.82

(54) **Aube de turbine à gaz à chambre de refroidissement par circulation de fluide.**

(30) Priorité : 10.11.81 FR 8120995

(43) Date de publication de la demande :
18.05.83 Bulletin 83/20

(45) Mention de la délivrance du brevet :
24.04.85 Bulletin 85/17

(84) Etats contractants désignés :
DE FR GB

(56) Documents cités :
FR-A- 1 276 994
US-A- 3 017 159
US-A- 3 528 751
US-A- 3 965 963
US-A- 4 257 737

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Lesgourgues, Jacques**
**7bis, Boulevard Ambroise Croizat**
**F-91100 Corbeil (FR)**
Inventeur : **Tirole, Jacques Philippe Henri**
**5, place Voltaire**
**F-91380 Chilly Mazarin (FR)**

(74) Mandataire : **Moinat, François**
**S.N.E.C.M.A. Service des Brevets Boîte Postale 81**
**F-91003 Evry Cedex (FR)**

## Description

L'invention concerne, d'une façon générale, les aubes de turbine à gaz comportant au moins une chambre prévue pour la circulation d'un fluide réfrigérant, celui-ci pouvant être notamment de l'air obtenu par dérivation d'une fraction du flux délivré par le compresseur accouplé à la turbine. L'expression « aubes de turbine » englobe ici aussi bien les aubes fixes d'un étage distributeur que les aubes mobiles d'une roue.

L'invention concerne plus particulièrement une aube perfectionnée du type ci-dessus.

A noter que le terme « demi-aube » employé dans ce qui suit ne doit pas être pris au sens mathématique du mot « demi » et qu'il s'agit en fait de deux éléments différents englobant, pour l'un, l'intrados et pour l'autre l'extrados.

On connaît déjà, notamment par le brevet français délivré sous le n° 1 276 994, une aube de turbine à gaz dans laquelle sont ménagés :
— une chambre de circulation de fluide réfrigérant (air) parcourant l'aube dans sa longueur et proche du bord d'attaque,
— un premier conduit rectiligne situé entre ladite chambre et le bord d'attaque et parallèle à celui-ci
— et une fente de communication entre ledit conduit et ladite chambre.

Cette aube peut comporter en outre :
— une chambre de circulation de fluide réfrigérant parcourant l'aube dans sa longueur et proche du bord de fuite,
— un deuxième conduit rectiligne situé entre ladite chambre et le bord de fuite, parallèle à celui-ci et débouchant par des lumières dans le bord de fuite et
— une fente de communication entre ledit conduit et ladite chambre.

Pour faciliter la réalisation des chambres, l'aube est réalisée par brasage de deux demi-aubes de formes complémentaires dont l'une porte l'extrados et l'autre l'intrados ; les sections courantes des chambres sont réparties dans l'une et dans l'autre demi-aube qui sont brasées l'une à l'autre dans des zones voisines du bord d'attaque et du bord de fuite. Mais on remarque que l'interface des deux demi-aubes subit des décrochements tels que le premier conduit rectiligne et la fente correspondante sont entièrement situés dans la demi-aube qui porte l'extrados ; il en est de même dans la zone des lumières du bord de fuite.

Les raisons de cette disposition de l'interface ne sont pas indiquées dans ledit brevet. Il est vraisemblable qu'il s'agit d'une précaution visant à obtenir un accostage précis des deux demi-aubes, les décrochements de l'interface jouant le rôle de butées, ainsi qu'à éviter l'obstruction partielle ou totale des conduits et des lumières par la brasure.

Mais cette disposition d'interface complique notablement la réalisation des faces d'assemblage des demi-aubes, l'usinage du premier conduit qui doit être percé de part en part dans la longueur de l'aube et l'usinage des lumières du bord de fuite qui doivent être percées à partir de celui-ci.

On connaît également par le US-A-4 257 787, une aube creuse réalisée en deux demi-aubes, mais on notera que si la structure de cette aube est plus simple que dans le cas précédent, le refroidissement obtenu n'est pas entièrement satisfaisant notamment par le fait que les dispositions de refroidissement du bord d'attaque ne sont pas très efficaces et nécessitent, dans chaque demi-aube, un usinage assez compliqué.

L'objet de l'invention est une aube de turbine du genre précité, c'est-à-dire dans laquelle sont ménagés :
— une chambre de circulation de fluide réfrigérant parcourant l'aube dans sa longueur et proche du bord d'attaque,
— un premier conduit rectiligne proche du bord d'attaque et parallèle à celui-ci
— et au moins un canal de communication entre ladite chambre et ledit conduit.

Ladite aube se caractérise en ce que chaque demi-aube comporte :
— un premier demi-conduit, de direction sensiblement parallèle au bord d'attaque, gravé par sillon, dans ladite interface, destiné à former, avec le premier demi-conduit complémentaire usiné dans l'autre demi-aube, le premier conduit ménagé dans le cœur du métal du bord d'attaque et de section inférieure à quelques millimètres carrés,
— une pluralité de premiers demi-canaux, de direction sensiblement perpendiculaire à celle dudit premier demi-conduit, gravés par sillons dans ladite interface, et destinés à former, avec les premiers demi-canaux complémentaires usinés dans l'autre demi-aube, des premiers canaux de communication entre la chambre de circulation proches du bord d'attaque et ledit premier conduit,
— un deuxième demi-conduit, de direction sensiblement parallèle au bord de fuite, gravé par sillons dans ladite interface, destiné à former, avec le deuxième demi-conduit complémentaire usiné dans l'autre demi-aube, un deuxième conduit ménagé dans le bord de fuite,
— une pluralité de deuxièmes demi-canaux échelonnés perpendiculairement sur la longueur dudit deuxième conduit et destinés à former, avec les deuxièmes demi-canaux complémentaires usinés dans l'autre demi-aube, des deuxièmes canaux de communication entre la chambre de circulation proche du bord de fuite et ledit deuxième conduit,
— une pluralité de troisièmes demi-canaux échelonnés perpendiculairement sur la longueur dudit deuxième conduit et destinés à former, avec les troisièmes demi-canaux complémentaires usinés dans l'autre demi-aube, des troisièmes canaux de communication entre ledit deuxième conduit et la paroi externe du bord de fuite, et en ce que, la demi-aube qui correspond à l'extrados de l'aube comporte une pluralité de quatrièmes canaux rectilignes percés en direction tangentielle à partir dudit premier demi-conduit et reliant celui-ci à la paroi externe de l'extrados en aval du bord d'attaque.

Les avantages résultant de la forme particulière des deux demi-aubes selon l'invention sont les suivants :

— la réalisation des conduits, des orifices et des lumières est grandement facilitée,

— la nécessité de prévoir des décrochements dans l'interface disparaît,

— il devient possible de multiplier le nombre des orifices de communication entre chambres et conduits et d'agir sur leur répartition pour assurer un refroidissement aussi efficace que possible du bord d'attaque et du bord de fuite,

— et si, selon une disposition déjà connue, des canaux rectilignes sont ménagés à partir du premier conduit pour déboucher dans la zone amont de l'extrados afin de refroidir cette zone par léchage et par dilution, il devient possible d'usiner ces canaux par perçage à partir dudit premier conduit ; non seulement leur réalisation est considérablement facilitée, mais en outre ils peuvent être orientés de telle sorte que leur direction soit aussi proche que possible de celle du flux de gaz au voisinage de ladite zone amont et leur efficacité est notablement accrue.

D'autres dispositions avantageuses de l'invention, seront évoquées dans la description qui suit d'exemples de réalisation d'une aube conforme à l'invention, en relation avec les dessins annexés dans lesquels :

la figure 1 est une section courante agrandie d'une aube de turbine à gaz réalisée conformément à l'invention par assemblage de deux demi-aubes A et B,

la figure 2 est une section partielle à plus grande échelle de la zone amont de ladite aube,

la figure 3 est une vue dans la même zone et à la même échelle de la face d'assemblage de la demi-aube A,

la figure 4 montre des sections partielles, à plus grande échelle que la figure 2, des deux demi-aubes utilisées pour la réalisation de ladite aube et vues immédiatement avant accostage et brasage, et la figure 5 montre à la même échelle les mêmes sections partielles après brasage.

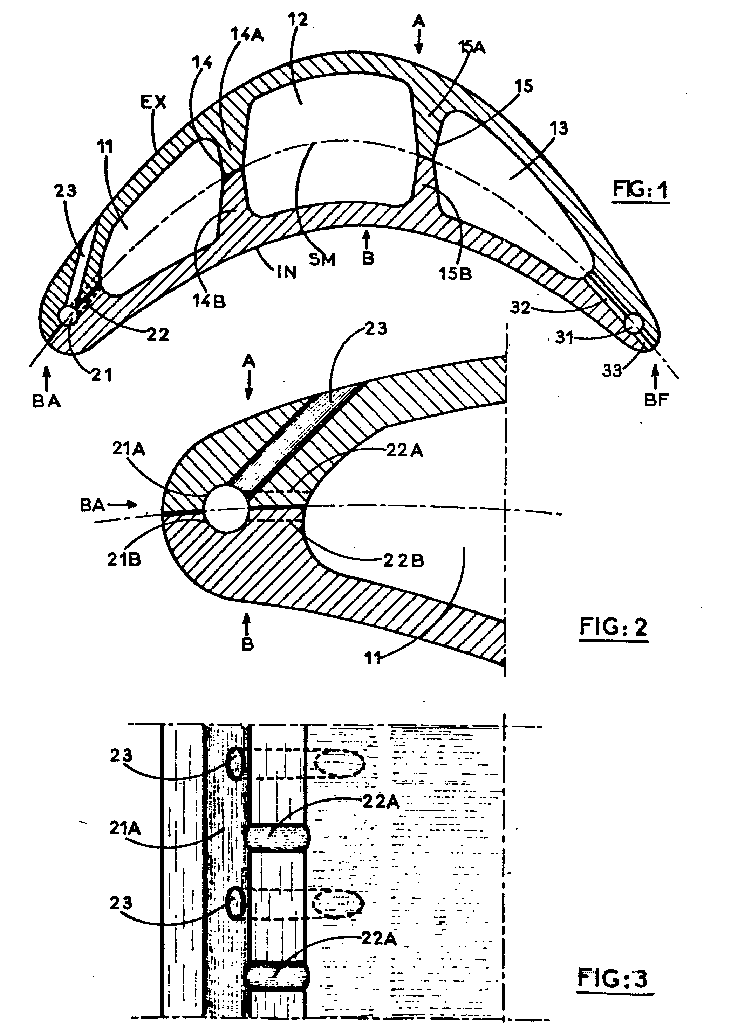

On considère simultanément les figures 1, 2 et 3. L'aube, en superalliage à base de nickel ou de cobalt, comporte trois chambres de circulation d'air, à savoir la chambre amont 11, la plus proche du bord d'attaque BA, la chambre aval 13, la plus proche du bord de fuite BF et la chambre médiane 12. Des nervures 14 et 15 séparent respectivement la chambre 11 de la chambre 12 et celle-ci de la chambre 13.

La portion d'aube délimitée par le bord d'attaque BA et par la chambre 11 est parcourue par un conduit 21 qui communique avec cette chambre par une pluralité de canaux 22 et qui permet le refroidissement dudit bord d'attaque par impact d'une fraction du flux d'air issu de ladite chambre. Une pluralité de canaux rectilignes 23 prennent naissance dans le conduit 21 et débouchent le long d'une génératrice de la zone amont de l'extrados EX qu'ils refroidissent par léchage de la paroi.

Quant à la portion d'aube délimitée par le bord de fuite BF et par la chambre 13, elle est parcourue par un conduit 31 qui communique avec cette chambre par une pluralité de canaux 32. Une pluralité de canaux 33 prennent naissance dans le conduit 31 et débouchent dans la génératrice aval dudit bord de fuite. Préférentiellement les canaux 33 sont décalées le long de la génératrice du bord de fuite par rapport aux canaux 32, par exemple de façon à déboucher dans le conduit 31 au milieu de l'intervalle séparant les canaux 32. Pour des raisons de facilité du dessin, les canaux 32 et les canaux 33 sont ramenés tous deux dans le plan de la coupe. Dans une solution préférée, les conduits 21 et 31 sont rectilignes.

On remarque que les parties terminales de l'aube (talon en tête et sapin au pied) ne sont pas représentées. Cette omission est intentionnelle, l'invention s'appliquant également aux cas où l'aube est une aube fixe appartenant à un aubage directeur ou une aube mobile appartenant à une roue de turbine.

L'aube représentée est constituée par l'assemblage des deux demi-aubes A et B dont la première porte l'extrados EX et l'autre l'intrados IN. Conformément à l'invention, leur interface passe par la surface continue SM qui est située au plus près de la génératrice amont du bord d'attaque BA et de la génératrice aval du bord de fuite BF et qui coupe sensiblement la nervure 14 en deux moitiés 14A et 14B et la nervure 15 en deux moitiés 15A et 15B. Ces moitiés de nervures sont en dépouille pour faciliter la réalisation par moulage des deux demi-aubes. Dans le mode de réalisation représenté les conduits 21 et 31, les canaux 22 et 32 et les canaux 33 ont une section cylindrique située pour moitié dans la demi-aube A et dans la demi-aube B (par exemple 21A et 21B, 22A et 22B), ce qui permet leur réalisation, par exemple par gravure, de sillons semi-circulaires dans les surfaces d'assemblage des deux demi-aubes préalablement à l'assemblage. Les canaux 23 ont aussi une section circulaire et sont aisément réalisables par perçage à partir du fond de la demi-section de conduit 21A.

La réalisation de l'aube comprend donc les opérations principales suivantes :

— fabrication des demi-aubes A et B par moulage,

— préparation des surfaces situées sur l'interface SM,

— gravure des conduits, canaux 21, 22, 31, 32 et 33,

— perçage des canaux 23 à partir du fond de la demi-section 21A et enduction des gravures par une couche d'un produit anti-mouillant,

— accostage et brasage des zones de contact des demi-aubes dans les régions du bord d'attaque et du bord de fuite,

— et traitement thermique de diffusion.

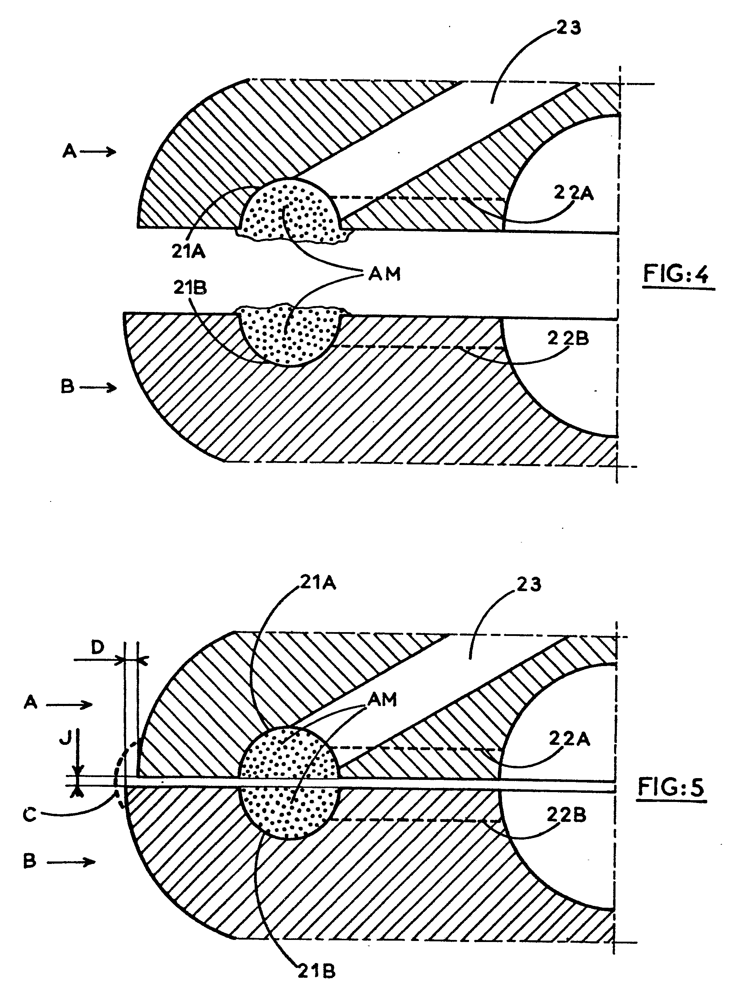

A titre d'information, on donne ci-après, en référence aux figures 4 et 5, quelques indications complémentaires sur certaines de ces opérations.

Si les conduits et canaux aménagés par gravure, par exemple 21A, 21B, 22A, 22B, ont une faible section (inférieure à quelques millimètres carrés), il est préférable que la préparation des surfaces comprenne une rectification des portions de surface à braser. Les figures 4 et 5 concernent le cas où les sections de ces conduits et orifices sont circulaires, ce qui impose de les ménager pour moitié dans la demi-aube A et pour moitié dans la demi-aube B. De toutes façons, on peut utiliser tout mode de gravure adéquat (fraisage, usinage électro-chimique ou par électroérosion, etc...). Quant aux canaux 23, on peut les réaliser par tout moyen de perçage approprié choisi en fonction de leur diamètre et de leur profondeur.

Le dépôt de produit « anti-mouillant » AM dans les gravures et constitué par une poudre d'oxyde réfractaire, par exemple de l'alumine, projetée au pistolet en suspension dans un liquide volatil et non polluant tel que l'alcool éthylique. Les surfaces à braser sont alors nettoyées.

La couche intermédiaire de métal d'apport servant au brasage peut être mise en place sous diverses formes, à savoir :

— flash électrolytique sur au moins l'une des demi-aubes si les surfaces à braser sont quasi-jointives (jeu J très faible),

— feuillard du commerce si le jeu J est régulier et partout inférieur à 100 microns par exemple,

— et, si le jeu est irrégulier, ruban ou pâte obtenus par dispersion de la poudre d'alliage de brasure dans une résine pyrolysable ne laissant pas de résidu carboné.

On peut aussi disposer la pâte ou le ruban pour former un cordon C qui entoure le joint et qui s'écoule entre les demi-aubes lors du traitement thermique de brasage.

Si les conduits et canaux aménagés par gravure sont réellement très fins (section inférieure au millimètre carré), le dépôt anti-mouillant peut ne pas suffire pour éviter une obstruction partielle. Il importe alors que la quantité de métal d'apport soit strictement limitée. La solution la plus efficace consiste, à la manière connue, à utiliser un métal d'apport sous forme de fil calibré dont on détermine la longueur de coupe par des essais préalables.

En ce qui concerne la composition du métal d'apport, des essais entrepris avec des demi-aubes en superalliage à base de nickel (nuance NK15CATu) ou de cobalt (KC25NWTa et KC25NW) ont montré que les meilleurs résultats sont obtenus avec l'alliage suivant (à condition toutefois que le jeu J ne dépasse pas 100 microns), en proportions pondérales pour cent :

3,5 B ; 15 Cr ; reste Ni

qui est un eutectique dont le point de fusion est de 1 055 °C, les paramètres de traitement étant les suivants (en four sous vide) :

— brasage : 15 minutes à 1 200 °C
— diffusion : 16 heures à 1 160 °C.

Lorsque le jeu J est irrégulier et important, on peut utiliser la composition de brasage suivante :

3 B ; 4,5 Si ; 20 Co ; reste Ni

mais des porosités peuvent subsister dans le joint de brasage qui sont vraisemblablement dues à ce que cette composition n'est pas eutectique et à ce que la quantité de métal fondu lors du brasage est relativement importante. Il est alors préférable d'utiliser un procédé de brasage connu, ce procédé consistant à utiliser comme matériau d'apport un mélange intime de deux poudres d'alliage en proportions pondérales sensiblement inégales, à savoir :

— dans la plus forte proportion, une poudre de super-alliage dite « poudre de base » de composition proche de celle du superalliage des pièces et ne contenant substantiellement pas d'élément d'apport (ou fondant)

— et, dans la plus faible proportion, une poudre d'alliage dite « poudre d'apport » contenant, outre du nickel et/ou du cobalt, l'élément d'apport à une teneur telle que la température de liquides de cette poudre d'apport est inférieure à la température de solides du superalliage des pièces à assembler (ici les demi-aubes) et de la poudre de base.

Ce procédé donne de bons résultats même si le jeu J est important. Pour l'assemblage de deux demi-aubes en super-alliage à base de cobalt KC24NWTa, les meilleurs résultats sont obtenus avec une composition de mélange d'apport suivante :

— 95 % (en proportion pondérale) de poudre de base en superalliage KC25NW et

— 5 % de poudre d'apport en alliage de composition pondérale pour cent : 17 Co ; 4 Si ; 2,7 B ; reste Ni.

Les paramètres de traitement sont les suivants :

— brasage : 15 minutes à 1 200 °C
— diffusion : 15 heures à 1 200 °C.

Quel que soit le procédé de brasage utilisé, il peut être utile de recharger le contour du joint brasé, soit pour combler de légers « manques », soit pour faire disparaître un décrochement des bords des deux demi-aubes, tel que celui montré en D sur la figure 5. Cette recharge est réalisée après le traitement thermique de brasage et avant le traitement thermique de diffusion au moyen d'un cordon d'une pâte contenant une poudre de métal d'apport en suspension dans une résine pyrolysable. Le métal du cordon fond et s'écoule au cours du traitement thermique de diffusion pour combler les manques et/ou masquer le décrochement.

**Revendication**

Aube métallique creuse de turbine à gaz, constituée de deux demi-aubes de formes complémentaires assemblées suivant une inter-

4

face passant par la cavité de l'aube et dans laquelle sont ménagées des chambres de circulation de fluide de refroidissement parcourant l'aube dans sa longueur, respectivement proches des bords d'attaque et de fuite et dont la section courante est répartie entre l'une et l'autre demi-aube et un premier conduit rectiligne proche du bord d'attaque, caractérisé en ce que, chaque demi-aube comporte :

— un premier demi-conduit (21A, 21B), de direction sensiblement parallèle au bord d'attaque, gravé par sillon, dans ladite interface, destiné à former, avec le premier demi-conduit complémentaire usiné dans l'autre demi-aube, le premier conduit (21) ménagé dans le cœur du métal du bord d'attaque (BA) et de section inférieure à quelques millimètres carrés,

— une pluralité de premiers demi-canaux (22A, 22B), de direction sensiblement perpendiculaire à celle dudit premier demi-conduit, gravés par sillons dans ladite interface, et destinés à former, avec les premiers demi-canaux complémentaires usinés dans l'autre demi-aube, des premiers canaux de communication entre la chambre de circulation (11) proches du bord d'attaque et ledit premier conduit (21),

— un deuxième demi-conduit, de direction sensiblement parallèle au bord de fuite, gravé par sillons dans ladite interface, destiné à former, avec le deuxième demi-conduit complémentaire usiné dans l'autre demi-aube, un deuxième conduit (31) ménagé dans le bord de fuite,

— une pluralité de deuxièmes demi-canaux échelonnés perpendiculairement sur la longueur dudit deuxième conduit (31) et destinés à former, avec les deuxièmes demi-canaux complémentaires usinés dans l'autre demi-aube, des deuxièmes canaux (32) de communication entre la chambre de circulation (13) proche du bord de fuite et ledit deuxième conduit (31),

— une pluralité de troisièmes demi-canaux échelonnés perpendiculairement sur la longueur dudit deuxième conduit (31) et destinés à former, avec les troisièmes demi-canaux complémentaires usinés dans l'autre demi-aube, des troisièmes canaux (33) de communication entre ledit deuxième conduit (31) et la paroi externe du bord de fuite (BF), et en ce que, la demi-aube qui correspond à l'extrados de l'aube comporte une pluralité de quatrièmes canaux rectilignes (23) percés en direction tangentielle à partir dudit premier demi-conduit et reliant celui-ci à la paroi externe de l'extrados en aval du bord d'attaque.

**Claim**

Hollow metal blade of a gas turbine, made up of two half-blades of complementary shape assembled along an interface passing through the cavity of the blade and in which are formed chambers for flow of cooling fluid traversing the length of the blade, respectively adjacent the leading edge and the trailing edge and of which the general section is shared between one half-blade and the other, and a first rectilinear duct adjacent the leading edge, characterised in that each half-blade includes :

— a first half-duct (21A, 21B), extending substantially parallel to the leading edge, engraved by means of a groove at the said interface, intended to form, with the complementary first half-duct machined in the other half-blade, the first duct (21) formed in the core of the metal of the leading edge (BA) and less in section than a few square millimetres,

— a plurality of first half channels (22A, 22B) extending substantially perpendicularly to the direction of the said first half-duct, engraved by grooves in the said interface and intended to form, with the complementary first half-channels machined in the other half-blade, first communication channels between for flow chamber (11) adjacent to the leading edge and the said first duct (21),

— a second half-duct, extending substantially parallel to the trailing edge, engraved by grooves in the said interface, intended to form, with the second complementary half-duct machined in the other half-blade, a second duct (31) formed in the trailing edge,

— a number of second half-channels arranged perpendicularly along the length of the said second duct (31) and intended to form, with the two complementary half channels machined in the other half-blade, second communication channels (32) between the flow chamber (13) adjacent to the leading edge and the said second duct (31),

— a number of third half-channels arranged perpendicularly along the length of the said second duct (31) and intended to form with the complementary third half-channels machined in the other half-blade, third communication channels (33) between the said second duct (31) and the outer wall of the trailing edge (BF) and in that the half blade which corresponds to the extrados of the blade includes a plurality of fourth rectilinear channels (33) drilled in a tangential direction starting from the said first half-duct and connecting the latter with the outer wall of the extrados downstream of the leading edge.

**Patentanspruch**

Flüssigkeitsgekühlte Turbinenschaufel, bestehend aus zwei komplementär geformten Schaufelhälften, die längs einer Grenzfläche zusammengesetzt sind, welche durch den Hohlraum der Schaufel verläuft, mit ausgesparten Umlaufkammern für Kühlfluid, das die Schaufel der Länge nach bzw. in der Nähe der Vorderkante und der Hinterkante durchläuft und dessen Fließquerschnitt auf die beiden Schaufelhälften und eine erste geradlinige Leitung nahe der Vorderkante aufgeteilt ist, dadurch gekennzeichnet, daß jede Schaufelhälfte aufweist :

— eine in praktisch parallelem Verlauf zu der Vorderkante furchenartig in die Grenzfläche eingeschnittene erste Leitungshälfte (21A, 21B), die dazu bestimmt ist, mit der in die andere Schaufelhälfte eingearbeiteten komplementären ersten Leitungshälfte die erste Leitung (21) zu bilden, die mit einer unter einigen Quadratmillimetern betragenden Querschnittsfläche in dem Kern des Metalls an der Vorderkante (BA) ausgespart ist,

— eine Mehrzahl von praktisch senkrecht zu der Richtung der ersten Leitungshälfte verlaufenden, furchenartig in die Grenzfläche eingeschnittenen ersten Kanalhälften (22A, 22B), die dazu bestimmt sind, mit den in die andere Schaufelhälfte eingearbeiteten komplementären ersten Kanalhälften erste Verbindungskanäle (22) zwischen der in der Nähe der Vorderkante befindlichen Umlaufkammer (11) und der ersten Leitung (21) zu bilden,

— eine praktisch parallel zu der Hinterkante verlaufende, furchenartig in die Grenzfläche eingeschnittene zweite Leitungshälfte, die dazu bestimmt ist, mit der in die andere Schaufelhälfte eingearbeiteten komplementären zweiten Leitungshälfte eine zweite, in der Hinterkante ausgesparte Leitung (31) zu bilden,

— eine Mehrzahl von senkrecht über die Länge der zweiten Leitung (31) gestaffelten zweiten Kanalhälften, die dazu bestimmt sind, mit den in die andere Schaufelhälfte eingearbeiteten komplementären zweiten Kanalhälften zweite Verbindungskanäle (32) zwischen der in der Nähe der Hinterkante befindlichen Umlaufkammer (13) und der zweiten Leitung (31) zu bilden,

— eine Mehrzahl von senkrecht zu der Länge der zweiten Leitung (31) gestaffelten dritten Kanalhälften, die dazu bestimmt sind, mit den in die andere Schaufelhälfte eingearbeiteten komplementären dritten Kanalhälften zwischen der zweiten Leitung (31) und der Außenwand der Hinterkante (BF) dritte Verbindungskanäle (33) zu bilden, und dadurch, daß, die dem Schaufelrücken entsprechende Schaufelhälfte eine Mehrzahl von vierten geraden Kanälen (23) aufweist, die tangential von der ersten Leitungshälfte ausgehen und diese mit der Außenwand des Rückens stromabwärts von der Vorderkante verbinden.

0 079 285

FIG: 1

FIG: 2

FIG: 3

1

FIG:4

FIG:5